# EUROPÄISCHE PATENTANMELDUNG

(11) **EP 1 935 895 A1**
(43) Veröffentlichungstag der Anmeldung: **25.06.2008**
(21) Anmeldenummer: 07023934.8
(22) Anmeldetag: 11.12.2007
(51) Int. Cl.: C07F 9/30, C08K 5/5313, C09K 21/14

(54) **Salze von unsymmetrisch substuierten Bis-(1-Hydroxymethyl-)Phosphinsäuren**

(30) Priorität: 18.12.2006 DE 102006059720
(71) Anmelder: Clariant International Ltd., 4132 Muttenz (CH)
(72) Erfinder: Bauer, Harald, Dr., 50170 Kerpen (DE); Krause, Werner, Dr., 50354 Hürth (DE); Maas, Wiebke, Dr., 50354 Hürth (DE)
(74) Vertreter: Hütter, Klaus

(57) **Zusammenfassung**

Die Erfindung betrifft Salze von unsymmetrisch substituierten Bis-(1-Hydroxymethyl)-Phosphinsäuren der Formel (I)

A-P(=O)(OX)-B (I)

worin
A R₁R₂C(OH)- und B R₃R₄C(OH)- bedeutet, mit der Maßgabe, dass die Gruppen R₁R₂C(OH)- und -C(OH)R₃R₄ jeweils immer verschieden sind und wobei
R₁. R₂, R₃, R₄ Wasserstoff, Alkyl, Alkenyl, Alkinyl, Aralkyl, Aryl und/oder substituiertes Aryl bedeuten und
X ein Element der ersten Hauptgruppe, ein Element der zweiten Haupt- oder Nebengruppe, ein Element der dritten Haupt- oder Nebengruppe, ein Element der vierten Haupt- oder Nebengruppe, ein Element der achten Nebengruppe und/oder eine Stickstoffbase bedeutet.

## Beschreibung

Die Erfindung betrifft Salze von unsymmetrisch substituierten Bis-(1-Hydroxymethyl)-Phosphinsäuren, ein Verfahren zu deren Herstellung und ihre Verwendung.

Salze von unsymmetrisch substituierten Bis-(1-Hydroxymethyl)-Phosphinsäuren, die etwa der Formel (I)

A-P(=O)(OX)-B (I)

entsprechen, sind nach dem bisher bekannten Stand der Technik nicht oder nur sehr schwer zugänglich.

Die bisher bekannten Verfahren haben den Nachteil empfindlicher Ausbeuteverluste. Darüber hinaus ist es bisher nicht möglich, unsymmetrisch substituierte Salze von Bis-(1-Hydroxymethyl)-Phosphinsäuren mit definierten Substituenten bzw. Kohlenstoffkettenlängen und ausgewählten Kationen gezielt und wiederholbar herzustellen. Eine Reihe von Verbindungen aus dieser Gruppe ist bisher nicht zugänglich gewesen.

Es ist daher Aufgabe der vorliegenden Erfindung, Salze von unsymmetrisch substituierten Bis-(1-Hydroxymethyl)-Phosphinsäuren zur Verfügung zu stellen. Gelöst wird die Aufgabe durch Vertreter dieser Substanzgruppe, die in 1- und 1'-Stellung ausgewählte organische Substituenten tragen und entsprechende, erfindungsgemäß ausgewählte Kationen enthalten.

Gegenstand der Erfindung sind daher Salze von unsymmetrisch substituierten Bis-(1-Hydroxymethyl)-Phosphinsäuren der Formel (I)

A-P(=O)(OX)-B (I)

worin
A R₁R₂C(OH)- und B R₃R₄C(OH)- bedeutet, mit der Maßgabe, dass die Gruppen R₁R₂C(OH)- und -C(OH)R₃R₄ jeweils immer verschieden sind und wobei
R₁, R₂, R₃, R₄ Wasserstoff, Alkyl, Alkenyl, Alkinyl, Aralkyl, Aryl und/oder substituiertes Aryl bedeuten und
X ein Element der ersten Hauptgruppe, ein Element der zweiten Haupt- oder Nebengruppe, ein Element der dritten Haupt- oder Nebengruppe, ein Element der vierten Haupt- oder Nebengruppe, ein Element der achten Nebengruppe und/oder eine Stickstoffbase bedeutet.

Bevorzugt tragen R₁, R₂, R₃, und/oder R₄ Heteroatome und/oder sind mit einer funktionellen Gruppe substituiert.

Bevorzugt handelt es sich bei den funktionellen Gruppen um Carbonyl-, Aldehyd-, Carboxy-, Hydroxy-, Sulfonsäure-, Nitril-, Cyano- und/oder Epoxygruppen; um primäre, sekundäre und/oder tertiäre Aminogruppen und/oder um un-, teil- oder vollsubstituierte Triazine.

Bevorzugt handelt es sich bei den Alkylgruppen um Methyl, Ethyl, n-Propyl, i-Propyl, n-Butyl, sec.-Butyl, tert.-Butyl, n-Octyl und/oder um Ethylhexyl.

Bevorzugt handelt es sich bei den Carboxygruppen um Carboxyalkylgruppen des Typs (CH₂)ₙCO₂H mit n=1 bis 6.

Bevorzugt handelt es sich bei den Hydroxygruppen um Hydroxyalkylgruppen des Typs (CH₂)ₙOH mit n=1 bis 6.

Bevorzugt handelt es sich bei X um Li, Na, K; Mg, Ca, Zn; Al, Ce, La; Sn, Pb, Ti, Zr; Fe; NH₄, NH₃R₁, NH₂R,R₂, NHR₁R₂R₃ oder NR₁R₂R₃R₄.

Es ist weiterhin Aufgabe der vorliegenden Erfindung ein Verfahren zur Herstellung von unsymmetrisch substituierten Bis-(1-Hydroxymethyl)-Phosphinsäuren der Formel (I) zur Verfügung zu stellen.

Die Aufgabe wird gelöst durch Reaktion einer entsprechenden Phosphinsäure in einem Lösmittelsystem mit einem Salz, das das gewünschte Kation enthält und gleiche Anionen, wie sie im Lösungsmittelsystem durch Autodissoziation gebildet werden.

Die Erfindung betrifft daher auch ein Verfahren zur Herstellung von Salzen von unsymmetrisch substituierten Bis-(1-Hydroxymethyl)-Phosphinsäuren der Formel (I), dadurch gekennzeichnet, dass eine unsymmetrisch substituierte Phosphinsäure in einem Lösungsmittelsystem mit einem Reaktionspartner A umgesetzt wird, wobei es sich bei dem Reaktionspartner A um ein Element oder ein Salz eines Elements der ersten Hauptgruppe, ein Element oder ein Salz eines Elements der zweiten Haupt- oder Nebengruppe, ein Element oder ein Salz eines Elements der dritten Haupt- oder Nebengruppe, ein Element oder ein Salz eines Elements der vierten Haupt- oder Nebengruppe, ein Element oder ein Salz eines Elements der achten Nebengruppe und/oder eine Stickstoffbase handelt.

Weiterhin ist Gegenstand der Erfindung die Verwendung der erfindungsgemäßen Salze der unsymmetrisch substituierten Bis-(1-Hydroxymethyl)-Phosphinsäuren in Flammschutzmitteln, da die erfindungsgemäßen Salze von unsymmetrisch substituierten Phosphinsäuren bei wesentlich tieferen Temperaturen flammschutzaktiv als die Vertreter nach dem Stand der Technik.

Die Erfindung betrifft daher auch die Verwendung von Salzen der unsymmetrisch substituierten Bis-(1-Hydroxymethyl)-Phosphinsäuren nach einem oder mehreren der Ansprüche 1 bis 7 als Flammschutzmittel, insbesondere in Klarlacken und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern zum flammhemmend Ausrüsten von Polyester und Cellulose-Rein- und Mischgeweben durch Imprägnierung;
als Binder z.B. für Giesereimassen, Formsande;
als Vernetzer bzw. Beschleuniger beim Aushärten von Epoxyharzen, Polyurethanen und ungesättigten Polyesterharzen;
als Lichtschutzstabilisator und/oder Thermostabilisatoren für Baumwollgewebe, Polymerfasern und Kunststoffe;
als Pflanzenschutzmittel, z.B. als Pflanzenwachstumsregulator; als Herbizid, Pestizid und Fungizid;
als Therapeutikum oder Additiv in Therapeutika für Menschen und Tiere, z.B. als Enzymmodulator oder zur Stimulierung von Gewebewachstum;
als Sequestrierungsmittel z.B. zur Kontrolle von Ablagerungen in industriellen Wasserleitungssystemen;
bei der Mineralölgewinnung und in Metallbehandlungsmitteln;
als Mineralöl-Additiv z.B. als Antioxidans und zur Erhöhung der Octanzahl;
als Korrosionsschutzmittel;
in Wasch- und Reinigungsmittelanwendungen, z.B. als Entfärbungsmittel;
in Elektronikanwendungen z.B. in Polyelektrolyten für Kondensatoren, Batterien und Akkumulatoren;
als Radikalfänger in photosensitiven Schichten;
als Aldehydfänger, z.B. Formaldehyd oder Acetaldehydfänger.

Die Erfindung betrifft ebenfalls eine flammgeschützte thermoplastische Polymerformmasse enthaltend
0,5 bis 45 Gew.-% Salze von unsymmetrisch substituierten Bis-(1-Hydroxymethyl)-Phosphinsäuren nach mindestens einem der Ansprüche 1 bis 7 und
0,5 bis 99,5 Gew.-% thermoplastisches Polymer oder Mischungen derselben,
wobei die Summe der Komponenten 100 Gew.-% beträgt.

Die Erfindung betrifft auch eine flammgeschützte duroplastische Polymerformmasse, enthaltend 0,1 bis 45 Gew. -% Salze von unsymmetrisch substituierten Bis-(1-Hydroxymethyl)-Phosphinsäuren nach mindestens einem der Ansprüche 1 bis 7,
40 bis 89,9 Gew. -% ungesättigte Polyester und
10 bis 60 Gew. -% Vinylmonomer.

Die Erfindung betrifft schließlich auch ein flammwidrig ausgerüstetes Epoxidharz, enthaltend 0,5 bis 50 Gew.-% Salze von unsymmetrisch substituierten Bis-(1-Hydroxymethyl)-Phosphinsäuren nach mindestens einem der Ansprüche 1 bis 7, 5 bis 99,5 Gew.-% eines Epoxidharzes und 0 bis 20 Gew.-% eines Härters. Bevorzugt Substituenten für R₁, R₂, R₃, R₄ in Formel (I) sind auch substituiertes Phenyl, bevorzugt mono-, bis- und/oder tri-substituiertes Hydroxyphenyl-, Aminophenyl, N-Alkylaminophenyl oder N,N-Dialkylaminophenyl.

Erfindungsgemäße Verbindungen sind u.a. die folgenden Salze von unsymmetrisch substituierten Phosphinsäuren:
(H)(H)C(OH)-P(=O)(ONa)-C(OH)(H)(Methyl),
(H)(H)C(OH)-P(=O)(OK)-C(OH)(H)(Phenyl),
(H)(H)C(OH)-P(=O)(ONH₄)-C(OH)(H)((CH₂)₂CO₂H),
(H)(H)C(OH)-P(=O)(ONa)-C(OH)(Methyl)(Methyl),
(H)(H)C(OH)-P(=O)(OK)-C(OH)(Phenyl)(Methyl),
(H)(H)C(OH)-P(=O)(ONH₄)-C(OH)((CH₂)₂CO₂H)(Methyl),
(H)(H)C(OH)-P(=O)(ONa)-C(OH)(Phenyl)(Phenyl),
(H)(H)C(OH)-P(=O)(OK)-C(OH)(Phenyl)((CH₂)₂CO₂H),
(H)(H)C(OH)-P(=O)(ONH₄)-C(OH)((CH₂)₂CO₂H)((CH₂)₂CO₂H),
(H)(Phenyl)C(OH)-P(=O)(ONa)-C(OH)(H)(Methyl),
(H)((CH₂)₂CO₂H)C(OH)-P(=O)(OK)-C(OH)(H)(Methyl),
(H)(Methyl)C(OH)-P(=O)(ONH₄)-C(OH)(H)(Phenyl),
(H)(Methyl)C(OH)-P(=O)(ONa)-C(OH)(H)((CH₂)₂CO₂H),
(H)(Phenyl)C(OH)-P(=O)(OK)-C(OH)(H)((CH₂)₂CO₂H),
(H)(H)C(OH)-P(=O)(ONH₄)-C(OH)(Methyl)(Methyl),
(H)(Methyl)C(OH)-P(=O)(ONa)-C(OH)(Methyl)(Methyl),
(H)(Phenyl)C(OH)-P(=O)(OK)-C(OH)(Methyl)(Methyl),
(H)((CH₂)₂CO₂H)C(OH)-P(=O)(ONH₄)-C(OH)(Methyl)(Methyl),
(H)(H)C(OH)-P(=O)(ONa)-C(OH)(Phenyl)(Methyl),
(H)(Methyl)C(OH)-P(=O)(OK)-C(OH)(Phenyl)(Methyl),
(H)(Phenyl)C(OH)-P(=O)(ONH₄)-C(OH)(Phenyl)(Methyl),
(H)((CH₂)₂CO₂H)C(OH)-P(=O)(ONa)-C(OH)(Phenyl)(Methyl),
(H)(H)C(OH)-P(=O)(OK)-C(OH)((CH₂)₂CO₂H)(Methyl),
(H)(Methyl)C(OH)-P(=O)(ONH₄)-C(OH)((CH₂)₂CO₂H)(Methyl),
(H)(Phenyl)C(OH)-P(=O)(ONa)-C(OH)((CH₂)₂CO₂H)(Methyl),
(H)((CH₂)₂CO₂H)C(OH)-P(=O)(OK)-C(OH)((CH₂)₂CO₂H)(Methyl),
(H)(H)C(OH)-P(=O)(ONH₄)-C(OH)(Phenyl)(Phenyl),
(H)(Methyl)C(OH)-P(=O)(ONa)-C(OH)(Phenyl)(Phenyl),
(H)(Phenyl)C(OH)-P(=O)(OK)-C(OH)(Phenyl)(Phenyl),
(H)((CH₂)₂CO₂H)C(OH)-P(=O)(ONH₄)-C(OH)(Phenyl)(Phenyl),
(H)(H)C(OH)-P(=O)(ONa)-C(OH)(Phenyl)((CH₂)₂CO₂H),
(H)(Methyl)C(OH)-P(=O)(OK)-C(OH)(Phenyl)((CH₂)₂CO₂H),
(H)(Phenyl)C(OH)-P(=O)(ONH₄)-C(OH)(Phenyl)((CH₂)₂CO₂H),
(H)((CH₂)₂CO₂H)C(OH)-P(=O)(ONa)-C(OH)(Phenyl)((CH₂)₂CO₂H),
(H)(H)C(OH)-P(=O)(OK)-C(OH)((CH₂)₂CO₂H)((CH₂)₂CO₂H),
(H)(Methyl)C(OH)-P(=O)(ONH₄)-C(OH)((CH₂)₂CO₂H)((CH₂)₂CO₂H),
(H)(Phenyl)C(OH)-P(=O)(ONa)-C(OH)((CH₂)₂CO₂H)((CH₂)₂CO₂H),
(H)((CH₂)₂CO₂H)C(OH)-P(=O)(OK)-C(OH)((CH₂)₂CO₂H)((CH₂)₂CO₂H),
(Phenyl)(Methyl)C(OH)-P(=O)(ONH₄)-C(OH)(Methyl)(Methyl),
((CH₂)₂CO₂H)(Methyl)C(OH)-P(=O)(ONa)-C(OH)(Methyl)(Methyl),
(Methyl)(Phenyl)C(OH)-P(=O)(OK)-C(OH)(Methyl)(Methyl),
(Phenyl)(Phenyl)C(OH)-P(=O)(ONH₄)-C(OH)(Methyl)(Methyl),
((CH₂)₂CO₂H)(Phenyl)C(OH)-P(=O)(ONa)-C(OH)(Methyl)(Methyl),
(Methyl)((CH₂)₂CO₂H)C(OH)-P(=O)(OK)-C(OH)(Methyl)(Methyl),
(Phenyl)((CH₂)₂CO₂H)C(OH)-P(=O)(ONH₄)-C(OH)(Methyl)(Methyl),
((CH₂)₂CO₂H)((CH₂)₂CO₂H)C(OH)-P(=O)(ONa)-C(OH)(Methyl)(Methyl),
(Methyl)(H)C(OH)-P(=O)(OK)-C(OH)(Phenyl)(Methyl),
(Phenyl)(H)C(OH)-P(=O)(ONH₄)-C(OH)(Phenyl)(Methyl),
((CH₂)₂CO₂H)(H)C(OH)-P(=O)(ONa)-C(OH)(Phenyl)(Methyl),
(Methyl)(Methyl)C(OH)-P(=O)(OK)-C(OH)(Phenyl)(Methyl),
((CH₂)₂CO₂H)(Methyl)C(OH)-P(=O)(ONH₄)-C(OH)(Phenyl)(Methyl),
(Phenyl)(Phenyl)C(OH)-P(=O)(ONa)-C(OH)(Phenyl)(Methyl),
(Methyl)((CH₂)₂CO₂H)C(OH)-P(=O)(OK)-C(OH)(Phenyl)(Methyl),
(Phenyl)((CH₂)₂CO₂H)C(OH)-P(=O)(ONH₄)-C(OH)(Phenyl)(Methyl),
((CH₂)₂CO₂H)((CH₂)₂CO₂H)C(OH)-P(=O)(ONa)-C(OH)(Phenyl)(Methyl),
(Methyl)(H)C(OH)-P(=O)(OK)-C(OH)((CH₂)₂CO₂H)(Methyl),
(Phenyl)(H)C(OH)-P(=O)(ONH₄)-C(OH)((CH₂)₂CO₂H)(Methyl),
((CH₂)₂CO₂H)(H)C(OH)-P(=O)(ONa)-C(OH)((CH₂)₂CO₂H)(Methyl),
(Phenyl)(Phenyl)C(OH)-P(=O)(OK)-C(OH)((CH₂)₂CO₂H)(Methyl),
(Phenyl)((CH₂)₂CO₂H)C(OH)-P(=O)(ONH₄)-C(OH)((CH₂)₂CO₂H)(Methyl),
((CH₂)₂CO₂H)((CH₂)₂CO₂H)C(OH)-P(=O)(ONa)-C(OH)((CH₂)₂CO₂H)(Methyl),
(Methyl)(H)C(OH)-P(=O)(OK)-C(OH)(Phenyl)(Phenyl),
(Phenyl)(H)C(OH)-P(=O)(ONH₄)-C(OH)(Phenyl)(Phenyl),
((CH₂)₂CO₂H)(H)C(OH)-P(=O)(ONa)-C(OH)(Phenyl)(Phenyl),
(Phenyl)(Methyl)C(OH)-P(=O)(OK)-C(OH)(Phenyl)(Phenyl),
((CH₂)₂CO₂H)(Phenyl)C(OH)-P(=O)(ONH₄)-C(OH)(Phenyl)(Phenyl),
(Methyl)((CH₂)₂CO₂H)C(OH)-P(=O)(ONa)-C(OH)(Phenyl)(Phenyl),
(Phenyl)((CH₂)₂CO₂H)C(OH)-P(=O)(OK)-C(OH)(Phenyl)(Phenyl),
((CH₂)₂CO₂H)((CH₂)₂CO₂H)C(OH)-P(=O)(ONH₄)-C(OH)(Phenyl)(Phenyl),
(Methyl)(H)C(OH)-P(=O)(ONa)-C(OH)(Phenyl)((CH₂)₂CO₂H),
(Phenyl)(H)C(OH)-P(=O)(OK)-C(OH)(Phenyl)((CH₂)₂CO₂H),
((CH₂)₂CO₂H)(H)C(OH)-P(=O)(ONH₄)-C(OH)(Phenyl)((CH₂)₂CO₂H),
(Phenyl)(Methyl)C(OH)-P(=O)(ONa)-C(OH)(Phenyl)((CH₂)₂CO₂H),
((CH₂)₂CO₂H)(Methyl)C(OH)-P(=O)(OK)-C(OH)(Phenyl)((CH₂)₂CO₂H),
((CH₂)₂CO₂H)((CH₂)₂CO₂H)C(OH)-P(=O)(ONH₄)-C(OH)(Phenyl)((CH₂)₂CO₂H),
(Methyl)(H)C(OH)-P(=O)(ONa)-C(OH)((CH₂)₂CO₂H)((CH₂)₂CO₂H),
(Phenyl)(H)C(OH)-P(=O)(OK)-C(OH)((CH₂)₂CO₂H)((CH₂)₂CO₂H),
((CH₂)₂CO₂H)(H)C(OH)-P(=O)(ONH₄)-C(OH)((CH₂)₂CO₂H)((CH₂)₂CO₂H),
(Methyl)(Methyl)C(OH)-P(=O)(ONa)-C(OH)((CH₂)₂CO₂H)((CH₂)₂CO₂H),
(Phenyl)(Methyl)C(OH)-P(=O)(OK)-C(OH)((CH₂)₂CO₂H)((CH₂)₂CO₂H),
((CH₂)₂CO₂H)(Methyl)C(OH)-P(=O)(ONH₄)-C(OH)((CH₂)₂CO₂H)((CH₂)₂CO₂H),
(Methyl)(Phenyl)C(OH)-P(=O)(ONa)-C(OH)((CH₂)₂CO₂H)((CH₂)₂CO₂H),
(Phenyl)(Phenyl)C(OH)-P(=O)(OK)-C(OH)((CH₂)₂CO₂H)((CH₂)₂CO₂H),
((CH₂)₂CO₂H)(Phenyl)C(OH)-P(=O)(ONH₄)-C(OH)((CH₂)₂CO₂H)((CH₂)₂CO₂H),
(Methyl)((CH₂)₂CO₂H)C(OH)-P(=O)(ONa)-C(OH)((CH₂)₂CO₂H)((CH₂)₂CO₂H),
(Phenyl)((CH₂)₂CO₂H)C(OH)-P(=O)(OK)-C(OH)((CH₂)₂CO₂H)((CH₂)₂CO₂H),
((CH₂)₂CO₂H)((CH₂)₂CO₂H)C(OH)-P(=O)(ONH₄)-C(OH)((CH₂)₂CO₂H)((CH₂)₂CO₂H).

Erfindungsgemäße Verbindungen sind auch die folgenden Salze von unsymmetrisch substituierten Phosphinsäuren:
(H)(H)C(OH)-P(=O)(OAl_{1/3})-C(OH)(H)(Methyl),
(H)(H)C(OH)-P(=O)(OZn_{1/2})-C(OH)(H)(Phenyl),
(H)(H)C(OH)-P(=O)(OAl_{1/3})-C(OH)(H)((CH₂)₂CO₂H),
(H)(H)C(OH)-P(=O)(OMg_{1/2})-C(OH)(Methyl)(Methyl),
(H)(H)C(OH)-P(=O)(OAl_{1/3})-C(OH)(Phenyl)(Methyl),
(H)(H)C(OH)-P(=O)(OCa_{1/2})-C(OH)((CH₂)₂CO₂H)(Methyl),
(H)(H)C(OH)-P(=O)(OAl_{1/3})-C(OH)(Phenyl)(Phenyl),
(H)(H)C(OH)-P(=O)(OTi_{1/3})-C(OH)(Phenyl)((CH₂)₂CO₂H),
(H)(H)C(OH)-P(=O)(OA)_{1/3})-C(OH)((CH₂)₂CO₂H)((CH₂)₂CO₂H),
(H)(Phenyl)C(OH)-P(=O)(OZn_{1/2})-C(OH)(H)(Methyl),
(H)((CH₂)₂CO₂H)C(OH)-P(=O)(OAl_{1/3})-C(OH)(H)(Methyl),
(H)(Methyl)C(OH)-P(=O)(OAl_{1/3})-C(OH)(H)(Phenyl),
(H)(Methyl)C(OH)-P(=O)(OMg_{1/2})-C(OH)(H)((CH₂)₂CO₂H),
(H)(Phenyl)C(OH)-P(=O)(OAl_{1/3})-C(OH)(H)((CH₂)₂CO₂H),
(H)(H)C(OH)-P(=O)(OCa_{1/2})-C(OH)(Methyl)(Methyl),
(H)(Methyl)C(OH)-P(=O)(OAl_{1/3})-C(OH)(Methyl)(Methyl),
(H)(Phenyl)C(OH)-P(=O)(OCe_{1/3})-C(OH)(Methyl)(Methyl),
(H)((CH₂)₂CO₂H)C(OH)-P(=O)(OAl_{1/3})-C(OH)(Methyl)(Methyl),
(H)(H)C(OH)-P(=O)(OZn_{1/2})-C(OH)(Phenyl)(Methyl),
(H)(Methyl)C(OH)-P(=O)(OAl_{1/3})-C(OH)(Phenyl)(Methyl),
(H)(Phenyl)C(OH)-P(=O)(OMg_{1/2})-C(OH)(Phenyl)(Methyl),
(H)((CH₂)₂CO₂H)C(OH)-P(=O)(OAl_{1/3})-C(OH)(Phenyl)(Methyl),
(H)(H)C(OH)-P(=O)(OCa_{1/2})-C(OH)((CH₂)₂CO₂H)(Methyl),
(H)(Methyl)C(OH)-P(=O)(OAl_{1/3})-C(OH)((CH₂)₂CO₂H)(Methyl),
(H)(Phenyl)C(OH)-P(=O)(OTi_{1/3})-C(OH)((CH₂)₂CO₂H)(Methyl),
(H)((CH₂)₂CO₂H)C(OH)-P(=O)(OAl_{1/3})-C(OH)((CH₂)₂CO₂H)(Methyl),
(H)(H)C(OH)-P(=O)(OZn_{1/2})-C(OH)(Phenyl)(Phenyl),
(H)(Methyl)C(OH)-P(=O)(OAl_{1/3})-C(OH)(Phenyl)(Phenyl),
(H)(Phenyl)C(OH)-P(=O)(OMg_{1/2})-C(OH)(Phenyl)(Phenyl),
(H)((CH₂)₂CO₂H)C(OH)-P(=O)(OAl_{1/3})-C(OH)(Phenyl)(Phenyl),
(H)(H)C(OH)-P(=O)(OCa_{1/2})-C(OH)(Phenyl)((CH₂)₂CO₂H),
(H)(Methyl)C(OH)-P(=O)(OAl_{1/3})-C(OH)(Phenyl)((CH₂)₂CO₂H),
(H)(Phenyl)C(OH)-P(=O)(OCe_{1/3})-C(OH)(Phenyl)((CH₂)₂CO₂H),
(H)((CH₂)₂CO₂H)C(OH)-P(=O)(OAl_{1/3})-C(OH)(Phenyl)((CH₂)₂CO₂H),
(H)(H)C(OH)-P(=O)(OZn_{1/2})-C(OH)((CH₂)₂CO₂H)((CH₂)₂CO₂H),
(H)(Methyl)C(OH)-P(=O)(OAl_{1/3})-C(OH)((CH₂)₂CO₂H)((CH₂)₂CO₂H),
(H)(Phenyl)C(OH)-P(=O)(OMg_{1/2})-C(OH)((CH₂)₂CO₂H)((CH₂)₂CO₂H),
(H)((CH₂)₂CO₂H)C(OH)-P(=O)(OAl_{1/3})-C(OH)((CH₂)₂CO₂H)((CH₂)₂CO₂H),
(Phenyl)(Methyl)C(OH)-P(=O)(OCa_{1/2})-C(OH)(Methyl)(Methyl),
((CH₂)₂CO₂H)(Methyl)C(OH)-P(=O)(OAl_{1/3})-C(OH)(Methyl)(Methyl),
(Methyl)(Phenyl)C(OH)-P(=O)(OTi_{1/3})-C(OH)(Methyl)(Methyl),
(Phenyl)(Phenyl)C(OH)-P(=O)(OAl_{1/3})-C(OH)(Methyl)(Methyl),
((CH₂)₂CO₂H)(Phenyl)C(OH)-P(=O)(OZn_{1/2})-C(OH)(Methyl)(Methyl),
(Methyl)((CH₂)₂CO₂H)C(OH)-P(=O)(OAl_{1/3})-C(OH)(Methyl)(Methyl),
(Phenyl)((CH₂)₂CO₂H)C(OH)-P(=O)(OMg_{1/2})-C(OH)(Methyl)(Methyl),
((CH₂)₂CO₂H)((CH₂)₂CO₂H)C(OH)-P(=O)(OAl_{1/3})-C(OH)(Methyl)(Methyl),
(Methyl)(H)C(OH)-P(=O)(OCa_{1/2})-C(OH)(Phenyl)(Methyl),
(Phenyl)(H)C(OH)-P(=O)(OAl_{1/3})-C(OH)(Phenyl)(Methyl),
((CH₂)₂CO₂H)(H)C(OH)-P(=O)(OCe_{1/3})-C(OH)(Phenyl)(Methyl),
(Methyl)(Methyl)C(OH)-P(=O)(OAl_{1/3})-C(OH)(Phenyl)(Methyl),
((CH₂)₂CO₂H)(Methyl)C(OH)-P(=O)(OZn_{1/2})-C(OH)(Phenyl)(Methyl),
(Phenyl)(Phenyl)C(OH)-P(=O)(OAl_{1/3})-C(OH)(Phenyl)(Methyl),
(Methyl)((CH₂)₂CO₂H)C(OH)-P(=O)(OMg_{1/2})-C(OH)(Phenyl)(Methyl),
(Phenyl)((CH₂)₂CO₂H)C(OH)-P(=O)(OAl_{1/3})-C(OH)(Phenyl)(Methyl),
((CH₂)₂CO₂H)((CH₂)₂CO₂H)C(OH)-P(=O)(OCa_{1/2})-C(OH)(Phenyl)(Methyl),
(Methyl)(H)C(OH)-P(=O)(OAl_{1/3})-C(OH)((CH₂)₂CO₂H)(Methyl),
(Phenyl)(H)C(OH)-P(=O)(OTi_{1/3})-C(OH)((CH₂)₂CO₂H)(Methyl),
((CH₂)₂CO₂H)(H)C(OH)-P(=O)(OAl_{1/3})-C(OH)((CH₂)₂CO₂H)(Methyl),
(Phenyl)(Phenyl)C(OH)-P(=O)(OZn_{1/2})-C(OH)((CH₂)₂CO₂H)(Methyl),
(Phenyl)((CH₂)₂CO₂H)C(OH)-P(=O)(OAl_{1/3})-C(OH)((CH₂)₂CO₂H)(Methyl),
((CH₂)₂CO₂H)((CH₂)₂CO₂H)C(OH)-P(=O)(OMg_{1/2})-C(OH)((CH₂)₂CO₂H)(Methyl),
(Methyl)(H)C(OH)-P(=O)(OAl_{1/3})-C(OH)(Phenyl)(Phenyl),
(Phenyl)(H)C(OH)-P(=O)(OCa_{1/2})-C(OH)(Phenyl)(Phenyl),
((CH₂)₂CO₂H)(H)C(OH)-P(=O)(OAl_{1/3})-C(OH)(Phenyl)(Phenyl),
(Phenyl)(Methyl)C(OH)-P(=O)(OCe_{1/3})-C(OH)(Phenyl)(Phenyl),
((CH₂)₂CO₂H)(Phenyl)C(OH)-P(=O)(OAl_{1/3})-C(OH)(Phenyl)(Phenyl),
(Methyl)((CH₂)₂CO₂H)C(OH)-P(=O)(OZn_{1/2})-C(OH)(Phenyl)(Phenyl),
(Phenyl)((CH₂)₂CO₂H)C(OH)-P(=O)(OAl_{1/3})-C(OH)(Phenyl)(Phenyl),
((CH₂)₂CO₂H)((CH₂)₂CO₂H)C(OH)-P(=O)(OMg_{1/2})-C(OH)(Phenyl)(Phenyl),
(Methyl)(H)C(OH)-P(=O)(OAl_{1/3})-C(OH)(Phenyl)((CH₂)₂CO₂H),
(Phenyl)(H)C(OH)-P(=O)(OCa_{1/2})-C(OH)(Phenyl)((CH₂)₂CO₂H),
((CH₂)₂CO₂H)(H)C(OH)-P(=O)(OAl_{1/3})-C(OH)(Phenyl)((CH₂)₂CO₂H),
(Phenyl)(Methyl)C(OH)-P(=O)(OTi_{1/3})-C(OH)(Phenyl)((CH₂)₂CO₂H),
((CH₂)₂CO₂H)(Methyl)C(OH)-P(=O)(OAl_{1/3})-C(OH)(Phenyl)((CH₂)₂CO₂H),
((CH₂)₂CO₂H)((CH₂)₂CO₂H)C(OH)-P(=O)(OZn_{1/2})-C(OH)(Phenyl)((CH₂)₂CO₂H),
(Methyl)(H)C(OH)-P(=O)(OAl_{1/3})-C(OH)((CH₂)₂CO₂H)((CH₂)₂CO₂H),
(Phenyl)(H)C(OH)-P(=O)(OMg_{1/2})-C(OH)((CH₂)₂CO₂H)((CH₂)₂CO₂H),
((CH₂)₂CO₂H)(H)C(OH)-P(=O)(OAl_{1/3})-C(OH)((CH₂)₂CO₂H)((CH₂)₂CO₂H),
(Methyl)(Methyl)C(OH)-P(=O)(OCa_{1/2})-C(OH)((CH₂)₂CO₂H)((CH₂)₂CO₂H),
(Phenyl)(Methyl)C(OH)-P(=O)(OAl_{1/3})-C(OH)((CH₂)₂CO₂H)((CH₂)₂CO₂H),
((CH₂)₂CO₂H)(Methyl)C(OH)-P(=O)(OCe_{1/3})-C(OH)((CH₂)₂CO₂H)((CH₂)₂CO₂H),
(Methyl)(Phenyl)C(OH)-P(=O)(OAl_{1/3})-C(OH)((CH₂)₂CO₂H)((CH₂)₂CO₂H),
(Phenyl)(Phenyl)C(OH)-P(=O)(OZn_{1/2})-C(OH)((CH₂)₂CO₂H)((CH₂)₂CO₂H),
((CH₂)₂CO₂H)(Phenyl)C(OH)-P(=O)(OAl_{1/3})-C(OH)((CH₂)₂CO₂H)((CH₂)₂CO₂H),
(Methyl)((CH₂)₂CO₂H)C(OH)-P(=O)(OMg_{1/2})-C(OH)((CH₂)₂CO₂H)((CH₂)₂CO₂H),
(Phenyl)((CH₂)₂CO₂H)C(OH)-P(=O)(OAl_{1/3})-C(OH)((CH₂)₂CO₂H)((CH₂)₂CO₂H),
((CH₂)₂CO₂H)((CH₂)₂CO₂H)C(OH)-P(=O)(OCa_{1/2})-C(OH)((CH₂)₂CO₂H)((CH₂)₂CO₂H).

Bevorzugt weisen die Salze der erfindungsgemäßen unsymmetrisch substituierten Phosphinsäuren Restfeuchten von 0,01 bis 10 Gew.-%, besonders bevorzugt von 0,1 bis 1 Gew.-% auf.

Bevorzugt weisen Salze der erfindungsgemäßen unsymmetrisch substituierten Phosphinsäuren mittlere Teilchengrößen von 0,1 bis 2000 µm, besonders bevorzugt von 10 bis 500 µm auf.

Bevorzugt weisen die Salze der erfindungsgemäßen unsymmetrisch substituierten Phosphinsäuren Schüttdichten von 80 bis 800 g/l, besonders bevorzugt von 200 bis 700 g/l auf.

Bevorzugt weisen die Salze der erfindungsgemäßen unsymmetrisch substituierten Phosphinsäuren Zersetzungstemperaturen von 150 bis 300°C, besonders bevorzugt von 160 bis 250 °C auf.

Bevorzugt wird beim erfindungsgemäßen Verfahren eine unsymmetrisch substituierten Phosphinsäure in einem Lösungsmittelsystem mit einem Reaktionspartner A umgesetzt, wobei die Reaktionspartner A bevorzugt aus einem Precursor hergestellt wird.

Bevorzugt werden die erfindungsgemäßen Verfahren in Kreislaufführung durchgeführt, indem die Salze von unsymmetrisch substituierten Phosphinsäuren abgetrennt werden und die erhaltene Mutterlauge wieder verwendet wird.

Bevorzugt wird bei der Kreislaufführung neue Phosphinsäure, Reaktionspartner A und Lösungsmittel hinzugesetzt und die Umsetzung wiederholt.

Bevorzugt wird bei der Kreislaufführung die Reaktionspartner A aus einem Precursor hergestellt.

Bevorzugt findet die Kreislaufführung diskontinuierlich (d.h. batchweise) oder kontinuierlich statt.

Bevorzugt erfolgt die Umsetzung der unsymmetrisch substituierten Phosphinsäure mit Reaktionspartner A bei einem Feststoffgehalt der Salze von unsymmetrisch substituierten Phosphinsäuren von 0,1 bis 70 Gew.-%, bevorzugt 5 bis 40 Gew.-%.

Die Reaktion erfolgt bevorzugt bei einer Temperatur von -20 bis +500 °C, besonders bevorzugt 70 bis 160 °C.

Bevorzugt beträgt das Verhältnis von Reaktionspartner A zu Phosphor (der unsymmetrisch substituierten Phosphinsäure) 0,8 bis 3 lonenequivalent (mol pro Ladung des Kations) besonders bevorzugt 1 bis 2.

Bevorzugt beträgt das Verhältnis von Lösungsmittel zu Phosphor (der unsymmetrisch substituierten Phosphinsäure) 2 bis 1000 mol/mol, besonders bevorzugt 4 bis 100 mol/mol.

Als Edukte bevorzugte unsymmetrisch substituierte Phosphinsäuren sind vom Typ A-P(=O)OH-B, wobei A und B die gleiche Bedeutung wie in Formel (I) haben.

Ein bevorzugtes Lösungsmittelsystem enthält durch Autodissoziation die gleichen Anionen wie sie die Reaktionspartner A enthält.
Ein bevorzugtes Lösungsmittelsystem besitzt eine Dissoziationskonstante pKa von 10 bis 30.

Bevorzugte Lösungsmittel sind Alkohole, wie z.B. Methanol, Ethanol, Iso-Propanol, n-Propanol, n-Butanol, Iso-Butanol, t-Butanol, n-Amylalkohol, Iso-Amylalkohol, t-Amylalkohol, n-Hexanol, n-Octanol, Iso- Octanol, n-Tridecanol, Benzylalkohol etc. Bevorzugt sind weiterhin Glycole wie z.B. Ethylenglycol, 1,2-Propandiol, 1,3-Propandiol, 1,3- Butandiol, 1,4-Butandiol, Diethylenglycol etc.

Bevorzugte Reaktionspartner A ist ein Salz eines Elementes der ersten Hauptgruppe, bevorzugt ein Alkalimetallhydroxid, Alkalimetalloxidhydroxid, Alkalimetallhydroxidcarbonat, Alkalimetallalkoholat, besonders bevorzugt Lithiumhydroxid, Natriumhydroxid, Kaliumhydroxid, Natriummethylat, Natriumethylat, Natrium-n-propylat, Natrium-i-propylat, Natrium-n-butylat, Natrium-i-butylat, Natriumtert-butylat, Natriumamylat und/oder Natriumglycolat.

Bevorzugte Reaktionspartner A ist auch ein Salz eines Elementes der ersten Hauptgruppe, bevorzugt ein Element der zweiten Haupt- und Nebengruppe, bevorzugt Erdalkalimetallhydroxid, Erdalkalimetalloxidhydroxid, Erdalkalimetallmetallhydroxid-carbonat, besonders bevorzugt Magnesiumhydroxid (Magnifin^{®} H5, Albermarle), Hydrotalcite (Mg₆Al₂(OH)₁₆CO₃ * nH₂O), Dihydrotalcit, Magnesium-Carbonate oder Magnesium-Calcium-Carbonate, Calciumhydroxid, basisches Zinkcarbonat, Zinkhydroxidcarbonat, basisches Zinkcarbonathydrat, Zinkhydroxide oder gemischte Zinkoxidhydroxide (Standard-Zinkoxid, z.B. von Grillo, aktiviertes Zinkoxid z.B. von Rheinchemie, Zincit, Calamin), -hydroxystannat u.a.

Bevorzugte Reaktionspartner A ist auch ein Salz eines Element der dritten Haupt- und Nebengruppe, bevorzugt Aluminiumhydroxid, Cerhydroxid, Lanthanhydroxid, Aluminiumalkoholat, Ceralkoholat, Lanthanalkoholat, Aluminiumhydroxid oder gemischtes Aluminiumoxidhydroxid, Dihydroxyaluminiumnatriumcarbonat, NaAl(OH)₂CO₃ und/oder Polyaluminiumhydroxy-Verbindungen, die vorzugsweise einen Aluminiumgehalt von 9 bis 40 Gew.-% besitzen.

Bevorzugte Reaktionspartner A ist auch ein Salz eines Element der vierten Haupt- und Nebengruppe, bevorzugt Zinnhydroxide, Bleihydroxide, Titanoxidhydroxide Zirkonoxidhydroxide, Zinnalkoholate, Titanalkoholate oder Zirkonalkoholate.

Bevorzugte Titanalkoholate d.h. Titan-Alkoxide sind Titan-(IV)-n-propoxid (Tilcom^{®} NPT, Vertec^{®} NPT), Titan-(IV)-n-butoxid, Titanchloridtriisopropoxid, Titan-(IV)-ethoxid und Titan-(IV)-2-ethylhexyloxid (Tilcom^{®} EHT, Vertetec^{®} EHT)

Bevorzugte Zinnalkoholat d.h. Zinn-Alkoxid ist Zinn-(IV)-tert-butoxid.

Bevorzugte Zirkonalkoholat d.h. Zirkonium-Alkoxid ist Zirkon-(IV)-tert-butoxid.

Bevorzugte Precursors sind ein Element der ersten Hauptgruppe, bevorzugt Li, Na, K, in der elementaren, metallischen Form, als Oxid, Peroxid, Superoxid, ein Element der zweiten Haupt- und Nebengruppe, bevorzugt Mg, Ca, Zn, in der elementaren, metallischen Form, als Oxid, Peroxid. Bevorzugt sind Zinkperoxide, Zinkoxide (z.B. Zinkoxid aktiv von Rhein Chemie, Brüggemann KG, Zincit oder Calamin; Standard-Zinkoxid, Zinkweiss G6, Zinkoxid 2011, Zinkoxid F-80, Zinkweiss^{®} Pharma 8, Zinkweiss^{®} Pharma A, Zinkweiss^{®} Rotsiegel, Zinkweiss^{®} Weissiegel der Fa. Grillo-Werke AG), ein Element der dritten Haupt- und Nebengruppe, bevorzugt Al, Ce, La, in der elementaren, metallischen Form, als Oxid, Peroxid, ein Element der vierten Haupt- und Nebengruppe, bevorzugt Sn, Pb, Ti, Zr, in der elementaren, metallischen Form, als Oxid, Peroxid.

Bevorzugt wird in einem erfindungsgemäßen Verfahren 2 das erfindungsgemäße Salz der unsymmetrisch substituierten Ph durch Zugabe eines anderen Reaktionspartners B in ein anderes Metallsalz umgewandelt werden.

Bevorzugte Reaktionspartner B sind Borate, Carbonate, Hydroxocarbonate, Hydroxocar-bonathydrate, gemischte Hydroxocarbonate, gemischte Hydroxocarbonathydrate, Phosphate, Sulfate, Sulfat hydrate, Hydroxosulfathydrate, gemischte Hydroxosulfathydrate, Oxysulfate, Acetate, Nitrate, Fluoride, Fluoridhydrate, Chlorid, Chloridhydrate, Oxychloride, Bromide, lodide, lodid hydrate, Carbonsäurederivate und/oder Alkoxide eines Elementes der ersten Hauptgruppe, der zweiten Haupt- und Nebengruppe - bevorzugt Mg, Ca, Zn - der dritten Haupt- und Nebengruppe - bevorzugt Al, Ce, La - der vierten Haupt- und Nebengruppe, bevorzugt Sn, Pb, Ti, Zr.

Bevorzugte Reaktionspartnern B sind Aluminiumchlorid, Aluminiumnitrat, Aluminiumsulfat, Titanylsulfat, Zinknitrat und/oder Zinksulfat.

Bevorzugt erfolgt die Umsetzung in einem Rührkessel, Mischer und/oder Kneter.

Bevorzugt erfolgt die Umsetzung in den erfindungsgemäßen Verfahren mit einem Energieeintrag von 0,083 bis 1,65 kW/m³, besonders bevorzugt 0,33 - 1,65 kW/m³.

Bevorzugt werden die Salze der unsymmetrisch substituierten Phosphinsäuren in den erfindungsgemäßen Verfahren durch Filtrieren und/oder Zentrifugieren aus dem Reaktionsgemisch abgetrennt.

Bevorzugt werden die Salze der unsymmetrisch substituierten Phosphinsäuren in den erfindungsgemäßen Verfahren mit Druck-Filternutschen, Vakuum-Filternutschen, Rührwerksfilternutschen, Druck-Kerzenfilter, Axial-Blattfilter, Kreis-Blattfilter, Zentrifugal-Scheibenfilter, Kammer-/Rahmenfilterpressen, Automatische Kammerfilterpressen, Vakuum-Trommelzellenfilter, Vakuum-Scheibenzellenfilter, Vakuum-Innenzellenfilter, Vakuum-Planzellenfilter, Rotations-Druckfilter oder Vakuum-Bandfilter abgetrennt.

Bevorzugt beträgt der Filtrationsdruck 0,5 Pa bis 6 MPa.

Bevorzugt beträgt die Filtrationstemperatur 0 bis 400 °C.

Bevorzugt beträgt die spezifische Filterleistung 10 bis 200kg*h⁻¹*m⁻².

Bevorzugt beträgt die Restfeuchte des Filterkuchens 5 bis 60 %.

Bevorzugt werden die Salze der unsymmetrisch substituierten Phosphinsäuren in den erfindungsgemäßen Verfahren mit Vollmantelzentrifugen wie Überlauf-Zentrifugen, Schäl-Zentrifugen, Kammer-Zentrifugen, Schneckenaustrags-Zentrifugen, Teller-Zentrifugen, Rohr-Zentrifugen, Siebzentrifugen wie Hänge- und Pendel-Zentrifugen, Siebschnecken-Zentrifugen, Siebschäl-Zentrifugen oder Schub-Zentrifugen abgetrennt.

Bevorzugt beträgt das Beschleunigungsverhältnis 300 bis 15 000.

Bevorzugt beträgt die Suspensionsdurchsatzleistung 2 bis 400 m³*h⁻¹.

Bevorzugt beträgt die Feststoffdurchsatzleistung 5 bis 80 t*h⁻¹.

Bevorzugt beträgt die Restfeuchte des Kuchens 5 bis 60 %.

Bevorzugt werden die Salze der unsymmetrisch substituierten Phosphinsäuren in den erfindungsgemäßen Verfahren getrocknet.

Geeignete Aggregate für die Trocknung sind Kammertrockner, Kanaltrockner, Bandtrockner (Luftgeschwindigkeit 2 - 3 m/s), Tellertrockner (Temperatur 20 bis 400 °C), Trommeltrockner (100 - 250 °C Heißgas-Temperatur), Schaufeltrockner (50 - 300 °C Temperatur), Stromtrockner (10 - 60 m/s Luftgeschwindigkeit, 50 - 300 °C Abluft-Temperatur), Fließbetttrockner (0,2 - 0,5 m/s Luftgeschwindigkeit, 50 - 300 °C Abluft-Temperatur, Walzentrockner, Röhrentrockner 20 bis 200 °C Temperatur, Schaufeltrockner, Vakuumtrockenschränke (20 bis 300 °C Temperatur, 0,001 - 0,016 MPa Druck), Vakuumwalzentrockner (20 bis 300 °C Temperatur, 0,004 - 0,014 MPa Druck, Vakuumschaufeltrockner (20 bis 300 °C Temperatur, 0,003 - 0,02 MPa Druck), Vakuumkonustrockner (20 bis 300 °C Temperatur, 0,003 - 0,02 MPa Druck).

Überraschend wurde gefunden, dass die Zersetzungstemperatur der erfindungsgemäßen Salze von unsymmetrisch substituierten Phosphinsäuren tiefer liegt als die vergleichbaren Salze von symmetrisch substituierten Bis-(1-Hydroxymethyl-) Phosphinsäuren oder Salze von Dialkylphosphinsäuren. Sie sind daher bei wesentlich tieferen Temperaturen flammschutzaktiv als die Vertreter nach dem Stand der Technik.

Bevorzugt ist daher die Verwendung der erfindungsgemäßen Salze von unsymmetrisch substituierten Phosphinsäuren als Booster bzw. Synergisten in Flammschutzmitteln bzw. als Flammschutzmittel alleine.

Bevorzugt ist die Verwendung der erfindungsgemäßen Salze von unsymmetrisch substituierten Phosphinsäuren als Booster bzw. Synergisten in Flammschutzmitteln bzw. als Flammschutzmittel alleine in Klarlacken und Intumeszenzbeschichtungen, für Holz und andere cellulosehaltige Produkte, als reaktive und/oder nicht reaktive Booster bzw. Synergisten in Flammschutzmitteln bzw. als Flammschutzmittel alleine für Polymere.

Bevorzugt ist die Verwendung der erfindungsgemäßen Salze von unsymmetrisch substituierten Phosphinsäuren zur Herstellung von flammgeschützten Polymerformmassen, zur Herstellung von flammgeschützten Polymerformkörpern zum feuerhemmend-Ausrüsten von Polyester und Cellulose-Rein- und Mischgeweben durch Imprägnierung.

Bevorzugt ist die Verwendung der erfindungsgemäßen Salze von unsymmetrisch substituierten Phosphinsäuren zur Herstellung von flammgeschützten Polymerformmassen.

Bevorzugt handelt es sich bei dem Polymer um ein thermoplastisches oder duroplastisches Polymer.

Bevorzugt ist die Verwendung der erfindungsgemäßen Salze von unsymmetrisch substituierten Phosphinsäuren zur Herstellung von flammgeschützten thermoplastischen Polymerformmassen.

Bevorzugt enthält die flammgeschützte thermoplastische Polymerformmasse 0,5 bis 45 Gew.-% erfindungsgemäße Salze von unsymmetrisch substituierten Phosphinsäuren.

Bevorzugt enthält die flammgeschützte thermoplastische Polymerformmasse 0,5 bis 45 Gew.-% erfindungsgemäße Salze von unsymmetrisch substituierten Phosphinsäuren, 0,5 bis 95 Gew.-% thermoplastisches Polymer oder Mischungen derselben, wobei die Summe der Komponenten 100 Gew.-% beträgt.

Bevorzugt enthält die flammgeschützte thermoplastische Polymerformmasse 0,5 bis 45 Gew.-% erfindungsgemäße Salze von unsymmetrisch substituierten Phosphinsäuren, 0,5 bis 95 Gew.-% thermoplastisches Polymer oder Mischungen derselben, 0,5 bis 55 Gew.-% Additive, 0,5 bis 55 Gew.-% Füllstoff bzw. Verstärkungsmaterialien, wobei die Summe der Komponenten 100 Gew.-% beträgt.

Bevorzugt enthält die flammgeschützte thermoplastische Polymerformmasse
10 bis 40 Gew.-% erfindungsgemäße Salze von unsymmetrisch substituierten Phosphinsäuren,
10 bis 80 Gew.-% thermoplastisches Polymer oder Mischungen derselben
2 bis 40 Gew.-% Additive
2 bis 40 Gew.-% Füllstoff bzw. Verstärkungsmaterialien,
wobei die Summe der Komponenten 100 Gew.-% beträgt.

Ein Verfahren zur Herstellung von flammgeschützten thermoplastischen Polymerformmassen ist dadurch gekennzeichnet, dass die erfindungsgemäßen unsymmetrisch substituierten Phosphinsäure mit dem Polymergranulat und evtl. Additiven vermischt und auf einem Doppelschnecken-Extruder (ZSK^{®} 25 WLE, 14,5 kg/h, 200 U/min, L/D: 4) bei erfindungsgemäßen Temperaturen von 170°C (Polystyrol), ca. 270°C (PET, Polyethylenterephthalat), 230 bis 260 °C (Polybutylenterephthalat, PBT), von 260 °C (PA6) bzw. von 260 bis 280 °C (PA 66) eingearbeitet wird. Der homogenisierte Polymerstrang wird abgezogen, im Wasserbad gekühlt, anschließend granuliert. und auf einen Restfeuchtegehalt von 0,05 bis 5 %, bevorzugt 0,1 bis 1 Gew.-% getrocknet
Bevorzugt handelt es sich bei den thermoplastischen Polymeren um Polymere von Mono- und Diolefinen, beispielsweise Polypropylen, Polyisobutylen, Polybuten-1, Poly-4-methylpenten-1, Polyisopren oder Polybutadien sowie Polymerisate von Cyclo-olefinen wie z.B. von Cyclopenten oder Norbornen; ferner Polyethylen (das ggf. vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den thermoplastischen Polymeren um Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

Bevorzugt handelt es sich bei den Polymeren um Kohlenwasserstoffharze (z.B. C₅-C₉) inklusive hydrierte Modifikationen davon (z.B. Klebrigmacherharze) und Mischungen von Polyalkylenen und Stärke.

Bevorzugt handelt es sich bei den thermoplastischen Polymeren um Polystyrol, Poly-(p-methylstyrol) und / oder Poly-(alpha-methylstyrol).

Bevorzugt handelt es sich bei den thermoplastischen Polymeren um Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den thermoplastischen Polymeren um Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als sogenannte ABS-, MBS-, ASA- oder AES-Polymere bekannt sind.

Bevorzugt handelt es sich bei den thermoplastischen Polymeren um Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den thermoplastischen Polymeren um Polymere, die sich von alpha, beta -ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den thermoplastischen Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den thermoplastischen Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um thermoplastischen Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

Bevorzugt handelt es sich bei den thermoplastischen Polymeren um Polyphenylen-oxide und -sulfide und deren Mischungen mit Styrolpolymeren oder Polyamiden.

Bevorzugt handelt es sich bei den thermoplastischen Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den thermoplastischen Polymeren um Polyamide und Copolyamide, die sich von Diaminen und Dicarbonsäuren und / oder von Aminocarbonsäuren oder den entsprechenden Lactamen ableiten, wie Polyamid 4, Polyamid 6 (Akulon^{®} K122, DSM; Zytel^{®} 7301, Fa. DuPont; Durethan® B 29, Fa. Bayer), Polyamid 6/6 (Zytel^{®} 101, Fa. DuPont; Durethan® A30, Durethan® AKV, Durethan^{®} AM, Fa. Bayer; Ultramid^{®} A3, Fa BASF) 6/10, 6/9, 6/12, 4/6, 12/12, Polyamid 11, Polyamid 12 (Grillamid^{®} L20, Fa. Ems Chemie), aromatische Polyamide ausgehend von m-Xylol, Diamin und Adipinsäure; Polyamide, hergestellt aus Hexamethylendiamin und Iso- und / oder Terephthalsäure und gegebenenfalls einem Elastomer als Modifikator, z.B. Poly-2,4,4-trimethylhexamethylen-terephthalamid oder Poly-m-phenylenisophthalamid. Blockcopolymere der vorstehend genannten Polyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den thermoplastischen Polymeren um Polyester, die sich von Dicarbonsäuren und Dialkoholen und / oder von Hydroxycarbonsäuren oder den entsprechenden Lactonen ableiten, wie Polyethylenterephthalat, Polybutylenterephthalat (Celane^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den thermoplastischen Polymeren um Polycarbonate und Polyestercarbonate, um Polysulfone, Polyethersulfone und Polyetherketone.

Bevorzugt handelt es sich bei den Polymeren um Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugt ist die Verwendung der erfindungsgemäßen Salze von unsymmetrisch substituierten Phosphinsäuren zur Herstellung von flammgeschützten thermoplastischen Polymer-Formkörpern, -Filmen, -Fäden und -Fasern.

Bevorzugt ist die Verwendung der erfindungsgemäßen flammgeschützten thermoplastischen Formmassen, welche die Salze von unsymmetrisch substituierten Phosphinsäuren enthalten, zur Herstellung von flammgeschützten thermoplastischen Polymer-Formkörpern, -Filmen, -Fäden und -Fasern.

Bevorzugt enthalten die flammgeschützten Polymer-Formkörper, -Filme, -Fäden und -Fasern 0,5 bis 45 Gew.-% erfindungsgemäße Salze von unsymmetrisch substituierten Phosphinsäuren und
0,5 bis 95 Gew.-% thermoplastisches Polymer oder Mischungen derselben.

Bevorzugt enthalten die flammgeschützten Polymer-Formkörper, -Filme, -Fäden und -Fasern 0,5 bis 45 Gew.-% erfindungsgemäße Salze von unsymmetrisch substituierten Phosphinsäuren, 0,5 bis 95 Gew.-% thermoplastisches Polymer oder Mischungen derselben, 0,5 bis 55 Gew.-% Additive und
0,5 bis 55 Gew.-% Füllstoff bzw. Verstärkungsmaterialien.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z.B. Spritzgießmaschine (Typ Aarburg Allrounder^{®}) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Beim Verfahren zur Herstellung von flammgeschützten Polymer-Formkörpern wird die erfindungsgemäße flammgeschützte Formmasse auf einer bei folgenden Massetemperaturen zu Polymer-Formkörpern verarbeitet. Bevorzugte Massetemperaturen sind bei Polystyrol 200 bis 250 °C, bei Polypropylen 200 bis 300°C, bei Polyethylenterephthalat (PET) 250 bis 290 °C, bei Polybutylenterephthalat (PBT) 230 bis 270 °C, bei Polyamid 6 (PA 6) 260 bis 290 °C, bei Polyamid 6.6 (PA 6.6) 6.6 260 bis 290 °C und bei Polycarbonat 280 bis 320 °C.

Bevorzugt ist auch die Verwendung der erfindungsgemäßen Salze von unsymmetrisch substituierten Phosphinsäuren zur Herstellung von flammgeschützten duroplastischen Polymerformmassen.

Eine solche flammwidrige duroplastische Polymerformmasse enthält 0,1 bis 45 Gew. -% erfindungsgemäße Salze von unsymmetrisch substituierten Phosphinsäuren, 40 bis 90 Gew. -% ungesättigtes Polyester und 10 bis 60 Gew. -% Vinylmonomer.

Bevorzugt handelt es sich bei den duroplastische Polymeren um ungesättigte Polyesterharze, die sich von Copolyestern gesättigter und ungesättigter Dicarbonsäuren oder deren Anhydriden mit mehrwertigen Alkoholen, sowie Vinylverbindungen als Vernetzungsmittel ableiten. UP-Harze werden gehärtet durch radikalische Polymerisation mit Initiatoren (z.B. Peroxiden) und Beschleunigern.

Bevorzugte ungesättigte Dicarbonsäuren und -derivate zur Herstellung der Polyester sind Maleinsäureanhydrid und Fumarsäure.

Bevorzugte gesättigte Dicarbonsäuren sind Phthalsäure Isophthalsäure, Terephthalsäure, Tetrahydrophthalsäure, Adipinsäure.

Bevorzugte Diole sind 1,2 Propandiol, Ethylenglycol, Diethylenglycol und Neopentylglycol, Neopentylglycol, ethoxyliertes oder propoxyliertes Bisphenol A.

Bevorzugte Vinylverbindung zur Vernetzung ist Styrol.

Bevorzugte Härtersysteme sind Peroxide und Metallcoinitiatoren z.B. Hydroperoxide und Cobaltoctanoat und/oder Benzoylperoxid und Aromatische Amine und/oder UV-Licht und Photosensibilisatoren z.B. Benzoinether.

Bevorzugte Hydroperoxide sind Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid, Dicyclohexylperoxiddicarbonat.
Bevorzugt werden Initiatoren in Mengen von 0,1 bis 20 Gew. -%, vorzugsweise
0,2 bis 15Gew.-%, berechnet auf die Masse aller Comonomeren, eingesetzt.

Bevorzugte Metallcoinitiatoren sind Kobalt-, Mangan-, Eisen-, vanadium -, Nickel- oder Bleiverbindungen. Bevorzugt werden Metallcoinitiatoren in Mengen von 0.05 bis 1 Gew. -% berechnet auf die Masse aller Comonomere, eingesetzt.

Bevorzugte aromatische Amine sind Dimethylanilin, Dimethyl-p-toluol, Diethyl-anilin, Phenyldiethanolamine

Ein Verfahren zur Herstellung von flammgeschützten Copolymerisaten ist dadurch gekennzeichnet, dass man mindestens ein ethylenisch ungesättigtes Dicarbonsäureanhydrid, abgeleitet von mindestens einer C₄-C₈-Dicarbonsäure, mindestens eine vinylaromatische Verbindung und Polyol copolymerisiert und dann mit erfindungsgemäßer unsymmetrisch substituierter Phosphinsäure umsetzt.

Ein Verfahren zur Herstellung von flammwidrigen duroplastischen Massen ist dadurch gekennzeichnet, dass man ein duroplastisches Harz mit einer Flammschutzkomponente aus erfindungsgemäßer unsymmetrisch substituierter Phosphinsäure vermischt und die resultierende Mischung bei Drücken von 3 bis 10 bar und Temperaturen von 20 bis 60 °C nass presst (Kaltpressung).

Ein Verfahren zur Herstellung von flammwidrigen duroplastischen Massen ist dadurch gekennzeichnet, dass man ein duroplastisches Harz mit erfindungsgemäßer unsymmetrisch substituierter Phosphinsäure vermischt und die resultierende Mischung bei Drücken von 3 bis 10 bar und Temperaturen von 80 bis 150 °C nass presst (Warm- oder Heißpressung).

Bevorzugt ist die Verwendung der erfindungsgemäßen flammgeschützten duroplastischen Formmassen zur Herstellung von flammgeschützten duroplastischen Polymer-Formkörpern.

Ein flammwidrig ausgerüstetes Epoxidharz enthält 0,5 bis 50 Gew.-% der erfindungsgemäßen Salze von unsymmetrisch substituierten Phosphinsäuren, 5 bis 70 Gew.-% eines Epoxidharzes und 0 bis 20 Gew.-% eines Härters.

Bevorzugt handelt es sich bei den Polymeren um vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern und/ oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind Polyamine wie Diethylenetriamin Triethylentetramin, Aminoethylpiperazin, Isophorondiamin, Polyamidoamin, Diaminodiphenylmethan, Diaminodiphenolsulfone oder Dicyandiamid.

Geeignete Härter sind auch mehrbasige Säuren oder deren Anhydride wie z.B. Phthalsäureanhydrid, Maleinsäureanhydrid, Tetrahydrophthalsäureanhydrid, Methyltetrahydrophthalsäureanhydrid, Hexahydrophthalsäureanhydrid oder Methylhexahydrophthalsäureanhydrid
Geeignete Härter sind auch Phenole wie z.B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl Harz, Biphenol-modifiziertes Phenolaralkyl-Harz,
Phenoltrimethylolmethan-Harz, Tetraphenylolethan-Harz, Naphthol-Novolak-Harz, Naphthol-Phenol-Kocondensat-Harz, Naphthol-Cresol-Kocondensat-Harz, Biphenol-modifiziertes Phenol-Harz und Aminotriazin- modifiziertes Phenol-Harz.

Diese Härter können alleine oder in Kombination miteinander eingesetzt werden. Geeignete Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl-4-methylimidazol, 2-Phenylimidazol, 2-Heptadecylimidazol, Metallsalz organischer Säuren, Lewis Säuren und Amin-Komplex-Salze.

Epoxidharze sind geeignet zum Verguss von elektrischen bzw. elektronischen Bauteilen und für Tränk- und Imprägnierprozesse. In der Elektrotechnik werden die verwendeten Epoxidharze überwiegend flammwidrig ausgerüstet und für Leiterplatten und Isolatoren eingesetzt.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um vernetzbare Acrylharze, die sich von substituierten Acrylsäureestern ableiten, wie z.B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt ist die Verwendung der erfindungsgemäßen flammgeschützten Epoxidharze zur Herstellung von flammgeschützten duroplastischen Polymer-Formkörpern.

Die Erfindung umfasst auch flammgeschützte Polyurethan-Formmassen, hergestellt durch Reaktion von 0,1 bis 50 Gew.-Teilen erfindungsgemäßer unsymmetrisch substituierter Phosphinsäure mit 30 bis 65 Gew.-Teilen Polyisocyanat und 30 bis 65 Gew.-Teilen Polyol.

Ein Verfahren zur Herstellung einer flammgeschützten Polyurethan-Formmasse dadurch gekennzeichnet, dass 170 bis 70 Gewichtsteile, bevorzugt 130 bis 80 Gew.-Teile, Polyisocyanate mit 100 Gewichtsteilen Polyol, 0,1 bis 50 Gew.-Teilen erfindungsgemäßer unsymmetrisch substituierter Phosphinsäure und 0,1 bis 4 Gew.-Teilen, besonders bevorzugt 1 bis 2 Gew.-Teile, Katalysator zur Reaktion gebracht werden und wahlweise mit 0,1 bis 1,8 Gew.-Teilen, vorzugsweise 0,3 bis 1,6 Gew.-Teilen, Treibmittel aufgeschäumt werden.

Bevorzugt ist die Verwendung der erfindungsgemäßen flammgeschützten Polyurethan-Formmassen zur Herstellung von flammgeschützten duroplastischen Polymer-Formkörpern.

Bevorzugte Polyole sind Alkenoxidaddukte von Ethylenglykol, 1,2-Propandiol, Bisphenol A, Trimethylolpropan, Glycerin, Pentaerythrol, Sorbit, Zucker, abgebaute Stärke, Ethylendiamin, Diaminotoluol und/oder Anilin, die als Initiator dienen. Die bevorzugten Oxyalkylierungsmittel enthalten 2 bis 4 Kohlenstoffatome, bevorzugt sind es Ethylenoxid und Propylenoxid.

Bevorzugte Polyester-Polyole werden durch Polykondensation eines Polyalkoholes wie Ethylenglykol, Diäthylenglykol, Propylenglykol, 1,4-Butanediol, 1,5-Pentandiol, Methylpentandiol, 1,6-Hexanediol, Trimethylolpropan, Glycerin, Pentaerythritol, Diglycerol, Traubenzucker und/oder Sorbit, mit einer dibasischen Säure wie Oxalsäure, Malonsäure, Bernsteinsäure, Weinsäure, Adipinsäure, Sebacinsäure, Maleinsäure, Fumarsäure, Phthalsäure, Terephthalsäure erhalten. Diese Polyester-Polyole können alleine oder in Komination benutzt werden.

Geeignete Polyisocyanate sind aromatische, alicyclische or aliphatische Polyisocyanate, mit nicht weniger als zwei Isocyanat-Groupen und Mischungen davon. Bevorzugt sind aromatische Polyisocyanate wie Tolyldiisocyanat, Methylendiphenyldiisocyanat, Naphthylendiisocyanate, Xylylendiisocyanat, Tris/4-isocyanatophenyl)methan und Polymethylenepolyphenylendiisocyanate; alicyclische Polyisocyanate sind Methylendiphenyldiisocyanat, Tolyldiisocyanat und; aliphatische Polyisocyanate sind Hexamethylendiisocyanat, Isophorendiisocyanat, Demeryldiisocyanat, 1,1-Methylenbis(4-isocyanatocyclohexan-4,4'-Diisocyanatodicyclohexylmethan-Isomerengemisch, 1,4-Cyclohexyldiisocyanat, (R)Desmodur-Typen (Bayer) und Lysindiisocyanat und Mischungen davon. Geeignete Polyisocyanate sind modifizierte Produkte, die durch Reaktion von Polyisocyanat mit Polyol, Harnstoff, Carbodiimid und/oder Biuret erhalten werden. Geeignete Katalysatoren sind starke Basen, Alkalimetalsalze von Carbonsäuren oder aliphatische tertiäre Amine. Bevorzugt sind quaternäres Ammonium hydroxide, Alkalimetalhydroxid oder Alkoxid, Natrium oder Kaliumacetat, Kaliumoctoat, Natriumbenzoat, 1,4-diazabicyclo[2.2.2]octan, N,N,N',N'-Tetramethylhexa-methylenediamin, N,N,N',N'-Tetramethylpropylenediamin, N,N,N',N',N"-Pentamethyldiethylenetriamin, N,N'-Di-(C1-C2)-alkylpiperazin, Trimethylaminoethylpiperazin, N,N-Dimethylcyclo-hexylamin, N,N-Dimethylbenzylamin, N-Methylmorpholin, N-Ethylmorpholin, Trimethylamin, Triethylamin, Tributylamin, Triethylenediamin, Bis(dimethylamino-alkyl)piperazine, N,N,N',N'-tetramethylethylendiamin, N,N-Diethylbenzylamin, Bis(N,N-diethylaminoethyl)adipat, N,N,N',N'-Tetramethyl-1,3-butanediamin, N,N-Diethyl-[beta]-phenylethylamin, 1,2-Dimethylimidazol, 2-Methylimidazol usw.

Bevorzugt ist das Gewichtverhältnis des Polyisocyanate zu Polyol 170 zu 70, vorzugsweise 130 zu 80 bezogen auf 100 Gew.-Teile des Polyols.

Bevorzugte ist das Gewichtverhältnis des Katalysators 0.1 bis 4 Gew.-Teile, besonders bevorzugt 1 bis 2 Gew.-Teile bezogen auf 100 Gew.-Teile des Polyols.

Bevorzugte Treibmittel sind Wasser, Kohlenwasserstoff, Fluorchlorkohlenwasserstoff, Fluorokohlenwasserstoff etc.

Die Menge des Blähmittels ist 0.1 bis 1.8 Gew.-Teile, vorzugsweise 0.3 bis 1.6 Gew.-Teile, insbesondere 0.8 bis 1.6 Gew.-Teile bezogen auf 100 Gew.-Teile des Polyols

### Zersetzungstemperaturen

Stand der Technik: Salz einer symmetrisch substituierten Phosphinsäure (Aluminium-Bis-(1-Hydroxymethyl)-Phosphinat): 321 °C.
Stand der Technik: Salz einer Dialkylphosphinsäure (Aluminiumtrisdiethylphosphinat): 340 °C.
Dagegen erfindungsgemäße Salze von unsymmetrisch substituierten Phosphinsäuren: 160 bis 236 °C.
Die Erfindung wird durch die nachstehenden Beispiele erläutert.

### Beispiel 1

Es werden 21,9 g eines Acetaldehyd-Formaldehyd-Adduktes (Anteil am P-Gehalt des Materials 64 mol-%) in einem Berghoff-Laborautoklav mit 140 g demin. Wasser und 2,6 g Aluminiumhydroxid versetzt. Die Mischung wird unter Rühren auf 154 °C erhitzt und diese Temperatur für 20 h gehalten. Die erkaltete Suspension wird filtriert, der erhaltene Feststoff bei 20 mbar und 120 °C über 15 h getrocknet.

### Beispiel 2

In einem 1 L-Dreihalsrundkolben werden unter Rühren 14 g CaO in 350 g demin. Wasser dispergiert. Es bildet sich Calciumhydroxid. Es werden weiterhin 92,8 g eines Aceton-Formaldehyd-Adduktes (Anteil am P-Gehalt des Materials 83 mol-%) zugegeben. Die Mischung wird auf 90°C erhitzt und diese Temperatur für 1 h gehalten. Die erkaltete Suspension wird filtriert, der erhaltene Feststoff bei Atmosphärendruck und 120 °C über 15 h getrocknet.

### Beispiel 3

In einem 500 ml-Becherglas werden unter Rühren bei ca. 20 °C innerhalb von 10 min. 109,2 g eines Aceton-Acetaldehyd-Adduktes (Anteil am P-Gehalt des Materials 77 mol-%) zu 40 g Natronlauge (50 Gew.-%) gegeben. Die Lösung enthält 77 mol-% (bez. auf P) an Aceton-Acetaldehyd-Addukt-Natriumsalz.

### Beispiel 4

In einem 1 L-Becherglas werden 130,8 g eines Aceton-Butyraldehyd-Adduktes (Anteil am P-Gehalt des Materials 75 mol-%) unter Rühren bei ca. 20 °C in 140 g demin. Wasser gelöst und innerhalb von 30 min 62,6 g Ammoniumhydroxid-Lösung (28 Gew.-%) zu gegeben. Die Lösung enthält 75 mol-% (bez. auf P) an Aceton-Butyraldehyd -Addukt-Ammoniumsalz.

### Beispiel 5

Es werden 85,7 g eines Cyclohexanon-Formaldehyd-Adduktes (Anteil am P-Gehalt des Materials 68 mol-%) in einem Berghoff-Laborautoklav mit 140 g demin. Wasser und 10,1 g Zinkhydroxid versetzt. Die Mischung wird unter Rühren auf 150 °C erhitzt und diese Temperatur für 5 h gehalten. Die erkaltete Suspension wird filtriert, der erhaltene Feststoff bei 20mbar und 120 °C über 15 h getrocknet.

### Beispiel 6

In einem 2L-Dreihalsrundkolben mit Tropftrichter, Rückflusskühler und KPG-Rührer werden 31,9 g eines Benzaldehyd-Formaldehyd-Adduktes (Anteil am P-Gehalt des Materials 63 mol-%) unter Rühren in 700 g demin. Wasser gelöst und auf 50 °C erhitzt. In 30 min werden 80 g Natronlauge (5 Gew.-%) zugetropft. Das erhaltene Natriumsalz wird durch Zugabe von weiteren 13,7 g Aluminiumsulfatlösung (46 Gew.-% (Al₂(SO₄)3·14aq), und indem weitere 10 min gerührt wird, in das Aluminiumsalz umgewandelt. Die erkaltete Suspension wird filtriert, der erhaltene Feststoff mit wenig Wasser gewaschen und bei Atmosphärendruck und 150 °C über 48 h getrocknet.

### Beispiel 7

In einem 2L-Dreihalsrundkolben mit Tropftrichter, Rückflusskühler und KPG-Rührer werden 166,3 g eines Benzaldehyd-Acetaldehyd-Adduktes (Anteil am P-Gehalt des Materials 65 mol-%) unter Rühren in 700 g demin. Wasser gelöst und auf 90 °C erhitzt. Binnen 30 min werden 20 g Natriumhydroxid in kleinen Portionen zugegeben. Das erhaltene Natriumsalz wird durch Zugabe von weiteren 46,7 g Zinksulfatheptahydrat und indem weitere 1 h gerührt wird in das Zinksalz umgewandelt. Die erkaltete Suspension wird filtriert, der erhaltene Feststoff mit wenig Wasser gewaschen und bei Atmosphärendruck und 120°C über 15 h getrocknet.

### Beispiel 8

In einem 2L-Dreihalsrundkolben mit Tropftrichter, Rückflusskühler und KPG-Rührer werden 138,6 g eines Acetophenon-Formaldehyd-Adduktes (Anteil am P-Gehalt des Materials 78 mol-%) unter Rühren in 700 g demin. Wasser gelöst und auf 90 °C erhitzt. Binnen 10 h werden 40 g Natronlauge (50 %) zugetropft. Das erhaltene Natriumsalz wird durch Zugabe von wetieren 48,1 g Magnesiumsulfatheptahydrat und indem weitere 30 min gerührt wird in das Magnesiumsalz umgewandelt. Die erkaltete Suspension wird filtriert, der erhaltene Feststoff mit wenig Wasser gewaschen und bei 50 mbar und 120 °C über 6 h getrocknet.

### Beispiel 9

In einem 2L-Dreihalsrundkolben mit Tropftrichter, Rückflusskühler und KPG-Rührer werden 178,4 g eines Acetophenon-Formaldehyd-Adduktes (Anteil am P-Gehalt des Materials 78 mol-%) unter Rühren in 700 g Isopropylalkohol gelöst, Dann werden 27,7 g Titan(IV)-propylat zugegeben und auf ca. 82 °C erhitzt. Bei der Temperatur wird weitere 10h gerührt. Die erkaltete Suspension wird filtriert, der erhaltene Feststoff mit wenig Wasser gewaschen und bei Atmosphärendruck und120 °C über 15 h getrocknet.

### Beispiel 10

Es werden 156 g eines Lävulinsäure-Formaldehyd-Adduktes (Anteil am P-Gehalt des Materials 68 mol-%) in einem Berghoff-Laborautoklav mit 140 g demin. Wasser und 19,8 g Magnesiumhydroxid versetzt. Die Mischung wird unter Rühren auf 154 °C erhitzt und diese Temperatur für 10 h gehalten. Die erkaltete Suspension wird filtriert, der erhaltene Feststoff bei 20 mbar und 120 °C über 15 h getrocknet.

### Beispiel 11

Es werden 47,3 g eines Hydroxylaceton-Formaldehyd-Adduktes (Anteil am P-Gehalt des Materials 72 mol-%) in einem Berghoff-Laborautoklav mit 140 g demin. Wasser und 1,8 g Aluminium versetzt. Unter Wasserstoffbildung bildet sich intermediär aus Aluminum und Wasser Aluminiumhydroxid. Die Mischung wird unter Rühren auf 154 °C erhitzt und diese Temperatur für 10 h gehalten. Die erkaltete Suspension wird filtriert, der erhaltene Feststoff bei 20 mbar und 80 °C über 15 h getrocknet.

**Tabelle 1: Einsatzmengen und Versuchbedingungen zu den Beispielen 1 - 11**

| Beispiel | Unsymmetrisch subst. Phosphinsäure | | Komponente A | | Komponente B | | LM | |
|---|---|---|---|---|---|---|---|---|
| | | [g] | | [g] | | [g] | | [g] |
| 1 | Acetaldehyd-Formaldehyd-Addukt | 21,9 | Al(OH)3 | 2,6 | | | H2O | 140 |
| 2 | Aceton-Formaldehyd-Addukt | 92,8 | CaO | 14,0 | | | H2O | 350 |
| 3 | Aceton-Acetaldehyd-Addukt | 109,2 | NaOH 50 % | 40,0 | | | H2O | 20 |
| 4 | Aceton-Butyraldehyd-Addukt | 130,8 | NH40H 28 % | 62,6 | | | H2O | 140 a) |
| 5 | Cyclohexanon-Formaldehyd-Addukt | 85,7 | Zn(OH)2 | 10,1 | | | H2O | 140 |
| 6 | Benzaldehyd-Formaldehyd-Addukt | 31,9 | NaOH 5 % | 80,0 | Al2(SO4)3·14aq (46 %) | 13,7 | H2O | 700 a) |
| 7 | Benzaldehyd-Acetaldehyd-Addukt | 166,3 | NaOH 100 % | 20,0 | ZnS04+7aq | 46,7 | H2O | 700 a) |
| 8 | Acetophenon-Formaldehyd-Addukt | 138,6 | NaOH 50 % | 40,0 | MgSO4*7aq | 48,1 | H2O | 700 a) |
| 9 | Acetophenon-Formaldehyd-Addukt | 178,4 | Ti(iPrO)4 | 27,7 | | | iPrOH | 700 |
| 10 | Lävulinsäure-Formaldehyd-Addukt | 156,0 | Mg(OH)2 | 19,8 | | | H2O | 140 |
| 11 | Hydroxylaceton-Formaldehyd-Addukt | 47,3 | Al | 1,8 | | | H2O | 140 |

| | | | | | | | | |
|---|---|---|---|---|---|---|---|---|
| LM: Lösungsmittel a) über unsymm. subst. Phosphinsäure und/oder Reaktionspartner A | | | | | | | | |

**Tabelle 2: Versuchbedingungen zu den Beispielen 1 - 11 (Fortführung der Tabelle 1)**

| Beispiel | T (Rk1) [°C] | t (Rk1) [h] | T (Rk2) [°C] | t (Rk2) [h] | p (Tr) [mbar] | T (Tr) [°C] | t (Tr) [h] | Ausbeute [%] | RF [°C] | d50 [µm] | P [%] |
|---|---|---|---|---|---|---|---|---|---|---|---|
| 1 | 154 | 20,0 | - | - | 20 | 120 | 15 | 91 | 0,4 | 11 | 20,8 |
| 2 | 90 | 1,0 | - | - | 1013 | 120 | 15 | 50 | 0,1 | 70 | 17,8 |
| 3 | 20 | 0,2 | - | - | - | - | - | 100 | - | - | - |
| 4 | 20 | 0,5 | - | - | - | - | - | 100 | - | - | - |
| 5 | 150 | 5,0 | - | - | 20 | 120 | 15 | 84 | 0,1 | 15 | 13,7 |
| 6 | 50 | 0,5 | 50 | 0 | 1013 | 150 | 48 | 92 | 0,1 | 44 | 14,7 |
| 7 | 90 | 0,5 | 90 | 1 | 1013 | 120 | 15 | 88 | 0,2 | 92 | 12,5 |
| 8 | 90 | 0,5 | 90 | 10 | 50 | 120 | 6 | 89 | 0,6 | 27 | 13,6 |
| 9 | 82 | 10,0 | - | - | 1013 | 120 | 15 | 72 | 0,3 | 56 | 10,5 |
| 10 | 154 | 10,0 | - | - | 20 | 120 | 15 | 87 | 0,3 | 11 | 14,1 |
| 11 | 154 | 10,0 | - | - | 20 | 80 | 15 | 93 | 0,1 | 93 | 17,3 |

| | | | | | | | | | | | |
|---|---|---|---|---|---|---|---|---|---|---|---|
| a) über unsymmetrisch subst. Phosphinsäure und/oder Komponente A RkA: Reaktionsbedingungen mit Reaktionspartner A RkB: Reaktionsbedingungen mit Reaktionspartner B Tr: Bedingungen bei der Trocknung Ausbeute: bezogen auf Zielprodukt RF: Restfeuchte | | | | | | | | | | | |

## Patentansprüche

1. Salze von unsymmetrisch substituierten Bis-(1-Hydroxymethyl)-Phosphinsäuren der Formel (I)
A-P(=O)(OX)-B (I)
worin
A R₁R₂C(OH)- und B R₃R₄C(OH)- bedeutet, mit der Maßgabe, dass die Gruppen R₁R₂C(OH)- und -C(OH)R₃R₄ jeweils immer verschieden sind und wobei
R₁, R₂, R₃, R₄ Wasserstoff, Alkyl, Alkenyl, Alkinyl, Aralkyl, Aryl und/oder substituiertes Aryl bedeuten und
X ein Element der ersten Hauptgruppe, ein Element der zweiten Haupt- oder Nebengruppe, ein Element der dritten Haupt- oder Nebengruppe, ein Element der vierten Haupt- oder Nebengruppe, ein Element der achten Nebengruppe und/oder eine Stickstoffbase bedeutet.

2. Salze von unsymmetrisch substituierten Bis-(1-Hydroxymethyl)-Phosphinsäuren nach Anspruch 1, **dadurch gekennzeichnet, dass** R₁, R₂, R₃, und/oder R₄ Heteroatome tragen und/oder mit einer funktionellen Gruppe substituiert sind.

3. Salze von unsymmetrisch substituierten Bis-(1-Hydroxymethyl)-Phosphinsäuren nach Anspruch 1 oder 2, **dadurch gekennzeichnet, dass** es sich bei den funktionellen Gruppen um Carbonyl-, Aldehyd-, Carboxy-, Hydroxy-, Sulfonsäure-, Nitril-, Cyano- und/oder Epoxygruppen; um primäre, sekundäre und/oder tertiäre Aminogruppen und/oder um un-, teil- oder vollsubstituierte Triazine handelt.

4. Salze von unsymmetrisch substituierten Bis-(1-Hydroxymethyl)-Phosphinsäuren nach einem oder mehreren der Ansprüche 1 bis 3, **dadurch gekennzeichnet, dass** es sich bei den Alkylgruppen um Methyl, Ethyl, n-Propyl, i-Propyl, n-Butyl, sec.-Butyl, tert.-Butyl, n-Octyl und/oder um Ethylhexyl handelt.

5. Salze von unsymmetrisch substituierten Bis-(1-Hydroxymethyl)-Phosphinsäuren nach einem oder mehreren der Ansprüche 1 bis 3, **dadurch gekennzeichnet, dass** es sich bei den Carboxygruppen um Carboxyalkylgruppen des Typs (CH₂)ₙCO₂H mit n=1 bis 6 handelt.

6. Salze von unsymmetrisch substituierten Bis-(1-Hydroxymethyl)-Phosphinsäuren nach einem oder mehreren der Ansprüche 1 bis 3, **dadurch gekennzeichnet, dass** es sich bei den Hydroxygruppen um Hydroxyalkylgruppen des Typs (CH₂)ₙOH mit n=1 bis 6 handelt.

7. Salze von unsymmetrisch substituierten Bis-(1-Hydroxymethyl)-Phosphinsäuren nach einem oder mehreren der Ansprüche 1 bis 6, **dadurch gekennzeichnet, dass** es sich bei X um Li, Na, K; Mg, Ca, Zn; Al, Ce, La; Sn, Pb, Ti, Zr; Fe; NH₄, NH₃R₁, NH₂R₁R₂, NHR₁R₂R₃, oder NR₁R₂R₃R₄ handelt.

8. Verfahren zur Herstellung von Salzen von unsymmetrisch substituierten Bis-(1-Hydroxymethyl)-Phosphinsäuren der Formel (I), **dadurch gekennzeichnet, dass** eine unsymmetrisch substituierte Phosphinsäure in einem Lösungsmittelsystem mit einem Reaktionspartner A umgesetzt wird, wobei es sich bei dem Reaktionspartner A um Element oder ein Salz eines Elements der ersten Hauptgruppe, ein Element oder ein Salz eines Elements der zweiten Haupt- oder Nebengruppe, ein Element oder ein Salz eines Elements der dritten Haupt- oder Nebengruppe, ein Element oder ein Salz eines Elements der vierten Haupt- oder Nebengruppe, ein Element oder ein Salz eines Elements der achten Nebengruppe und/oder eine Stickstoffbase handelt.

9. Verfahren zur Herstellung von Salzen von unsymmetrisch substituierten Bis-(1-Hydroxymethyl)-Phosphinsäuren der Formel (I), **dadurch gekennzeichnet, dass** ein Salz der unsymmetrisch substituierten Bis-(1-Hydroxymethyl)-Phosphinsäure durch Zugabe eines anderen Reaktionspartners B in ein anderes Metallsalz umgewandelt wird.

10. Verwendung von Salzen der unsymmetrisch substituierten Bis-(1-Hydroxymethyl)-Phosphinsäuren nach einem oder mehreren der Ansprüche 1 bis 7 als Flammschutzmittel, insbesondere in Klarlacken und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern zum flammhemmenden Ausrüsten von Polyester und Cellulose-Rein- und Mischgeweben durch Imprägnierung; als Binder, als Vernetzer oder Beschleuniger beim Aushärten von Epoxyharzen, Polyurethanen oder ungesättigten Polyesterharzen; als Lichtschutzstabilisator und/oder Thermostabilisatoren für Baumwollgewebe, Polymerfasern und Kunststoffe; als Pflanzenschutzmittel, Pflanzenwachstumsregulator, Herbizid, Pestizid oder Fungizid; als Therapeutikum oder Additiv in Therapeutika; als Enzymmodulator oder zur Stimulierung von Gewebewachstum; als Sequestrierungsmittel; bei der Mineralölgewinnung und in Metallbehandlungsmitteln; als Mineralöl-Additiv; als Antioxidans und zur Erhöhung der Octanzahl; als Korrosions-schutzmittel; in Wasch- und Reinigungsmittelanwendungen; in Elektronikanwendungen; als Radikalfänger in photosensitiven Schichten; als Aldehydfänger.

11. Flammgeschützte thermoplastische Polymerformmasse enthaltend 0,5 bis 45 Gew.-% Salze von unsymmetrisch substituierten Bis-(1-Hydroxymethyl)-Phosphinsäuren nach mindestens einem der Ansprüche 1 bis 7 und 0,5 bis 99,5 Gew.-% thermoplastisches Polymer oder Mischungen derselben, wobei die Summe der Komponenten 100 Gew.-% beträgt.

12. Flammgeschützte duroplastische Polymerformmasse, enthaltend
0,1 bis 45 Gew. -% Salze von unsymmetrisch substituierten Bis-(1-Hydroxymethyl)-Phosphinsäuren nach mindestens einem der Ansprüche 1 bis 7,
40 bis 89,9 Gew. -% ungesättigte Polyester,
10 bis 60 Gew. -% Vinylmonomer.

13. Flammwidrig ausgerüstetes Epoxidharz, enthaltend
0,5 bis 50 Gew.-% Salze von unsymmetrisch substituierten Bis-(1-Hydroxymethyl)-Phosphinsäuren nach mindestens einem der Ansprüche 1 bis 7,
5 bis 99,5 Gew.-% eines Epoxidharzes,
0 bis 20 Gew.-% eines Härters.
